# EUROPEAN PATENT SPECIFICATION

(11) **EP 4 372 195 B1**
(45) Date of publication and mention of the grant of the patent: **20.08.2025**
(21) Application number: 22208066.5
(22) Date of filing: 17.11.2022
(51) Int. Cl.: E05F 15/41, E05F 15/659

(54) **SPEED CONTROL UPDATE RATE SLOWDOWN**
VERLANGSAMUNG DER GESCHWINDIGKEITSSTEUERUNGSAKTUALISIERUNGSRATE
RALENTISSEMENT DE LA VITESSE DE MISE À JOUR DE COMMANDE DE VITESSE

(43) Date of publication of application: 22.05.2024
(73) Proprietor: Inalfa Roof Systems Group B.V., 5807 GW Oostrum (NL)
(72) Inventor: van de Pol, Jochem, 6844 EE Arnhem (NL)
(74) Representative: De Vries & Metman

(56) References cited:
- EP-A1- 4 001 567
- WO-A1-2014/033205
- CN-B- 106 788 008
- GB-A- 2 380 074
- US-A1- 2007 057 646

## Description

The invention relates to an open roof construction for a vehicle.

Such an open roof construction is known in the art, for example from CN-106788008, GB-2380074 and/or US-2007/057646. Anti-pinch control is used for many years in open roof constructions to safeguard pinch events between the closure member and the edge of the roof opening in the vehicle roof. A pinch controller module may comprise a PWM (Pulse Width Modulation) controller and the pinch control module calculates a pinch force signal based on an input of measured data. During a pinch event the calculated pinch force signal may exceed a certain threshold and upon this, the pinch control module is triggered to send a signal to the electric driving unit for a reversal of the electric motor and thus of the closure member. Because the closure member moving speed is kept constant by the PWM controller and due to the resistance after the start of the pinch, resulting in a speed decrease of the closure member, the PWM controller increases the speed again by updating the duty cycle to for instance 100% and thus may influence the anti-pinch performance of the open roof construction.

In view of the above it is an object of the present invention to provide an improved pinch control module for an open roof construction.

In accordance with the present invention, the open roof construction is distinguished from the above acknowledged prior art publications by at least the features that the pinch control module is configured having a second threshold which is set to a lower level than the first threshold, which second threshold marks the start of a suspected pinch event. Further, the pinch control module is configured to lower the duty cycle of the PWM controller depending on the steepness of the increase of the calculated pinch force signal value before the pinch force signal exceeds the second threshold.

It is advantageous, upon the start of the pinch event, to modify the duty cycle such that it does not try to increase, but instead is kept at a lower level such that the speed of the closure member does not increase but is lowered. This increases the time for the pinch control module to detect a pinch. Since the pinch control module is configured to lower the duty cycle of the PWM controller depending on the steepness of the increase of the calculated pinch force signal value before the pinch force signal exceeds the second threshold, a potential advantage may be that the system may be made even more robust by setting the duty cycle reduction depending on the steepness of the increase of the calculated pinch force signal before it reaches the second threshold. This may be interpreted that when the steepness of the increase of the calculated pinch force signal is high, the duty cycle is lowered in between the second and first threshold, such that a maximum in reduction of time may be reached before the pinch force signal exceeds the first threshold.

According to another aspect of the invention the second threshold is configured for a calculated pinch force signal in the range of 15 N to 40N, more preferably of 25N. It is advantageous to set the second threshold not too low, to avoid that with any minimal increase of resistance faced by the mechanical drive system, each of such phenomena exceeds the second threshold and as such causes a start of a pinch. However, it is also advantageous to not set the second threshold too high, because this will reduce the time gain for the pinch control module to detect a pinch. As such it is conceivable to set the second threshold at the range as described above.

According to another embodiment of the invention the pinch control module is configured to modify the update of the duty cycle of the PWM controller to a lower and constant value upon exceeding of the second threshold of the suspected pinch event, such that the speed of the moving closure member is reduced. However, it is also conceivable according to another embodiment that the pinch control module is configured to lower the duty cycle of the PWM controller in a linear decreasing manner when the calculated pinch force signal exceeds the second threshold.

To maximize the time between exceeding the second threshold and exceeding of the first threshold, it is conceivable to reduce the update of the duty cycle to a lower constant level than what the update of the duty cycle was when the second threshold was exceeded or to lower the duty cycle in a linear decreasing manner, in both ways it increases the time for the pinch control module to detect a pinch and additionally the anti-pinch system gets more robust. For instance, this robustness is increased when the mechanical drive assembly is subjected to some resistance when moving the closure member to a closed position and when the second threshold is exceeded, due to the calculated pinch force signal an unnecessary exceeding of the first threshold may be avoided (false anti pinch). In such case the closure member will not come to a full standstill and will not be reversed.

According to another aspect of the invention, the pinch control module is configured to vary the update of the duty cycle of the PWM controller such that the electric driving unit supplies an adapted signal to the electric motor which controls the closure member moving with a constant speed, when the calculated pinch force signal is below the second threshold. And according to yet another aspect of the invention, the pinch control module is configured to calculate a pinch force signal from measured data from a group of data comprising, measurement of the variation in speed of the closure member, battery voltage, vehicle speed, ambient temperature, motor speed, position of the closure member in the roof opening, motor current.

To enable a constant speed of the closure member during opening and closing of the closure member, the pinch control module is configured such that it constantly calculates a pinch force signal from measured data, in such a way that, upon changing of the values of the measured data the pinch control module calculates changed pinch force signal output which may lead to adaption of the duty cycle of the PWM controller when the pinch control signal exceeds the second threshold and therewith keeping the moving speed of the closure member substantially constant. Unless one of the second or first thresholds are exceeded, in that case the speed of the closure member changes.

According to yet another aspect of the invention the pinch control module is configured to calculate the pinch force signal continuously from the continuously measured data and wherein the pinch control module resumes to keep the closure member at a constant speed when the calculated pinch force signal returns from a value above the second threshold to a value below the second threshold. In case when the second threshold is exceeded and the duty cycle is changed, the calculated pinch force signal may return to a value below the second threshold. This may for instance happen when a mechanical resistance in the mechanical drive assembly gives an input via the measured data to the pinch control module and the pinch signal exceeds the second threshold. The closure member moves further with a modified speed and when for some reason the resistance is no longer there and the calculated pinch signal returns to a value below the second threshold, the closure member will return to its speed before the mechanical interruption occurred.

According to another aspect of the invention, a method is defined in the appended independent method claim, where aspects thereof are defined in associated dependent method claims.
Fig. 1 is a schematic isometric view of a vehicle having the open roof construction.
Fig. 2 is a schematic exploded view of an open roof construction according to the present invention.
Fig. 3A is a scheme in which the essential parts of the invention are shown.
Fig. 3B is a scheme showing the steps of the method for detecting a pinch event.
Fig. 4 is a combined scheme showing the prior art coherence between pinch force, the PWM duty cycle and the closure member speed during a pinch event.
Figs. 5, 6, 7, 8 are combined schemes showing the coherence between pinch force, the PWM duty cycle and the closure member speed during a pinch event in first, second, and third embodiments not covered by the claimed invention and a fourth embodiment according to the invention.
Fig. 9 is a combined scheme showing the coherence between pinch force, the PWM duty cycle and the closure member speed during a false pinch event.

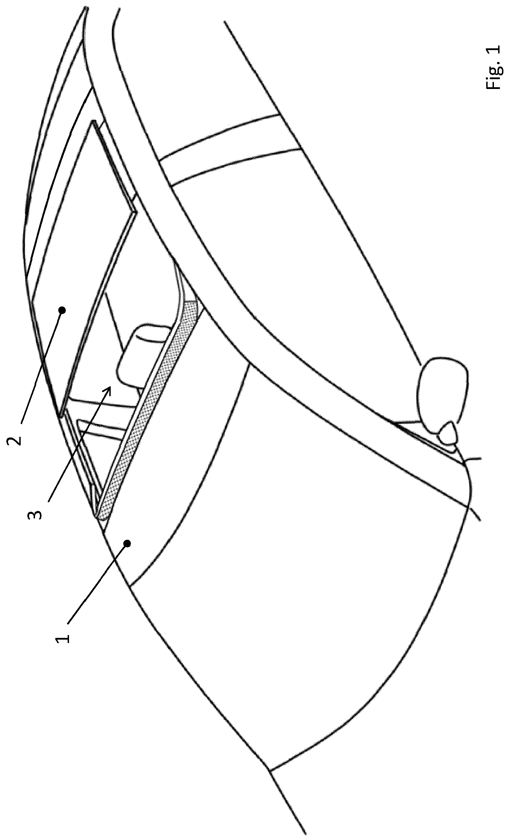

Fig. 1 shows an open roof construction for use in a roof 1 of a vehicle. The open roof construction comprises a closure member 2, which is shown in its open position, whereby the closure member 2 has been moved from a closed position within a roof opening 3 over the roof surface to a rear position above the vehicle roof 1. This closure member 2 may also be capable to be moved to a tilted position whereby the rear edge of the closure member 2 is lifted above the roof surface. The closure member 2 shown is a semi-transparent glass panel and underneath the opened closure member 2 there is shown a second semi-transparent glass panel which may be a fixed panel. This fixed panel covers the rear part of the opening 3 in the vehicle roof 1.

Such fixed panels are directly fixed to either the frame of the open roof construction or attached to the fixed roof 1 of the vehicle. It is conceivable that the rear glass panel is openable too.

The open roof construction further comprises a mechanical drive assembly 5 and an electric motor 4, together capable of moving the closure member 2 from a closed position in which the opening 3 of the vehicle roof 1 is closed, to at least a partly opened position.

When the closure member 2 moves from an open position to a closed position the movement of the closure member 2 is controlled by a pinch detection system in this document a pinch control module 7, which is a system that is required to avoid pinching of objects (such as hands or fingers) between the closure member 2 and the edge of the opening 3 in the roof 1.

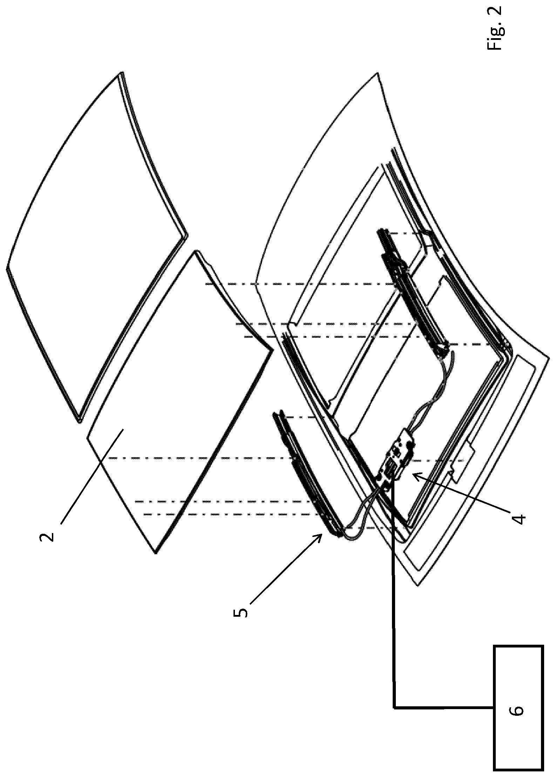

Fig. 2 shows a schematic exploded view of the open roof construction showing at the top the movable closure member 2 and the rear glass panel, the mechanical drive assembly 5 including the electric motor 4 and the electrical driving unit 6 (in a very schematic way). Further below in a schematic manner the frame of the open roof construction is shown, which frame may be attached to the vehicle body (the latter not shown).

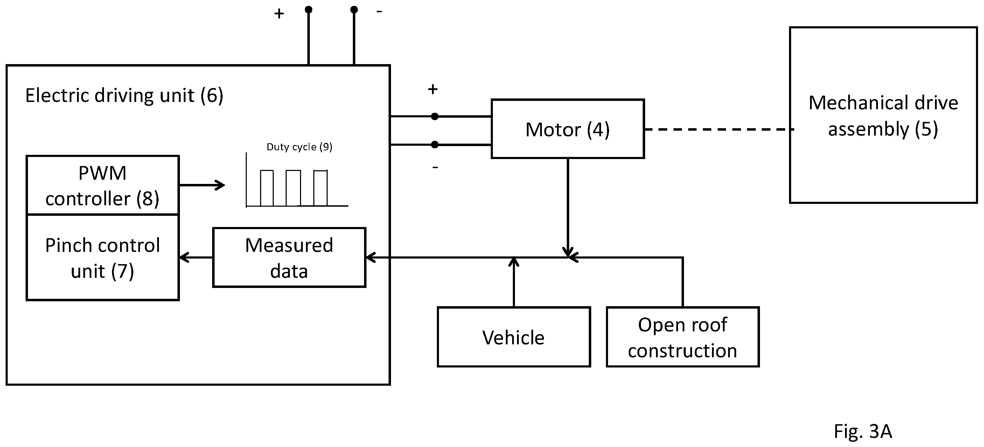

Fig. 3A shows in a more schematic detail the electric driving unit 6 having a pinch control module 7, which in turn comprises a PWM controller 8 and a gateway for receiving measured data for use in the pinch control module 7. The PWM controller 8 is capable of producing a duty cycle 9.

The pinch control module 7 is configured to calculate a pinch force signal 10 from measured data from a group data comprising: measurement of the variation in speed of the closure member 2, position of the closure member 2 in the roof opening 3 of the open roof construction, the battery voltage, vehicle speed, ambient temperature, motor speed or current from the motor. Upon calculation of the pinch force signal 10, the signal 10 is compared to a first threshold 11 to determine a pinch. When the pinch force signal 10 exceeds the first threshold 11, the pinch control module 7 incurs a signal to the electric driving unit 6, which unit immediately reverses the polarity of the electric motor 4 such that the closure member 2 reverses and as such the pinch event is being ended.

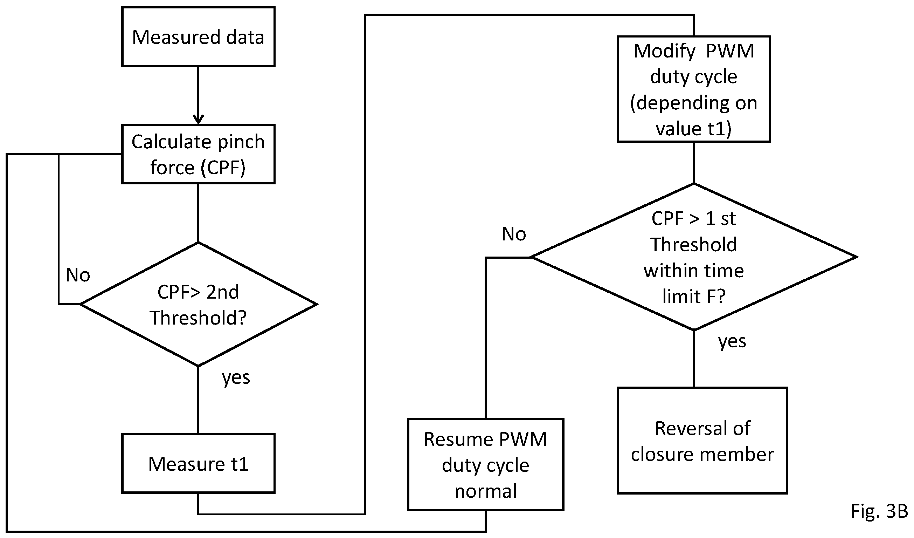

In Fig. 3B a scheme is shown of the individual steps of the method for detecting a pinch event. Measured data is send to the pinch control module 7, which module calculates a pinch force signal 10. The calculated pinch force (CPF) signal 10 is compared with the second threshold 12 and in case the second threshold 12 is exceeded, the PWM controller 8 will modify the duty cycle 9 at t1. This modification of the duty cycle 9 may be that the duty cycle 9 is lowered and kept constant compared to its level at t1, or it is conceivable that the duty cycle 9 is lowered in a linear or non-linear decreasing manner, compared to the duty cycle value at t1. Further when the CPF signal 10 exceeds the first threshold 11 within a time limit F, a reversal of the closure member 2 is eminent. Should the CPF signal 10 not exceed the first threshold 11 within time limit F, the PWM duty cycle 9 will be resumed as it was "normal", that is as it was before t0.

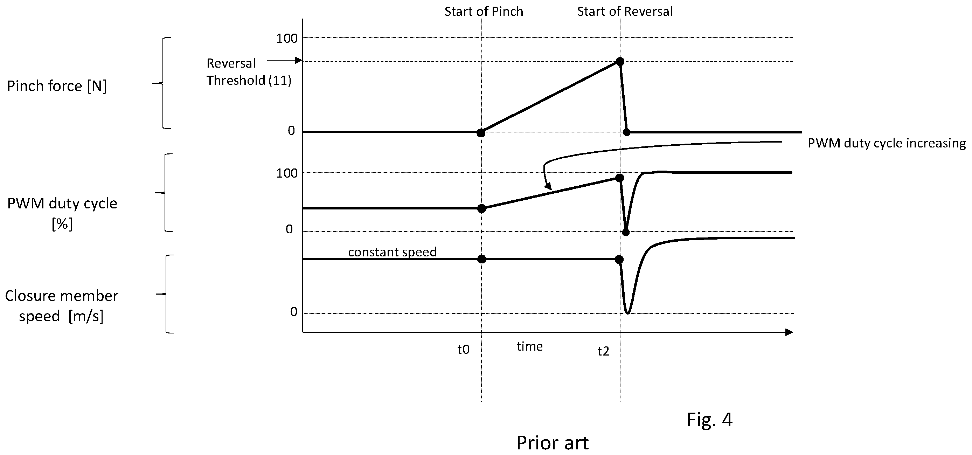

Fig. 4 shows a scheme in which the coherence between pinch force, pinch force threshold 11, PWM duty cycle 9 and closure member speed is explained for a prior art open roof construction.

During the pinch event, meaning as of the start of the pinch event till exceeding the reversal threshold (i.e. first threshold 11) the closure member 2 speed is kept constant by the duty cycle 9. This means that due to the resistance force by the pinched object and the requirement for the PWM controller 8 to keep the speed of the closure member 2 constant, the duty cycle 9 of the PWM controller 8 increases. Only if the duty cycle 9 reaches 100% before reaching the reversal threshold (first threshold 11), there is no further increase of the duty cycle 9 possible. As shown in fig. 4 the time at the start of pinch is t0 and the time of exceeding the first threshold 11 is t2. So, the difference between t0 and t2 is the time needed to determine whether there is an actual pinch event and to start the reversal of the closure member 2.

The duty cycle 9 update before t0 in Fig. 4 is set to a constant level and shown as a straight line in Fig. 4. However, in practice the duty cycle 9 will be not a straight line, because the mechanical drive assembly 5 will experience a continued variance in the resistance while sliding the closure member 2 towards the closed position. However, for clarity in the presented figures in this document these small variances are ignored and the PWM duty cycle 9 is shown in straight lines or curved lines as the case may be in the various figures.

In the behavior of the pinch detection systems of the prior art the spread in the mechanical resistance plays a large role. The resistance of the mechanical drive assembly 5 has an influence on the pinch detection. Namely, when the resistance is high which the mechanical drive assembly 5 encounters while sliding the closure member 2 to the closed position, the PWM duty cycle percentages 9 is also relatively high. This means that upon a start of a pinch at t0 the duty cycle 9 increases to keep the speed of the closure member 2 constant. However, because the duty cycle 9 update starting from a high percentage level is very soon at the 100% level and the update of the PWM duty cycle 9 cannot increase any further than the 100%, it will mean that in case the reversal threshold (first threshold 11) is not yet reached, the speed will slow down of the closure member 2. In such case that resistance of the mechanical drive assembly 5 is low, the duty cycle 9 is running also at a lower level. Upon start of the pinch at t0, the duty cycle 9 will increase to keep the closure member speed constant. However, this could mean in this situation that when the duty cycle 9 thus increases, the first threshold 11 may be reached earlier before that the duty cycle 9 reaches the 100%, and as such the closure member 2 will be reversed without that the closure member 2 speed will be reduced due to reaching the 100% limit of the PWM duty cycle 9. These two situations show that this would give a spread in behavior of the PWM controller 9 in various different open roof construction, because of the spread in the mechanical resistance.

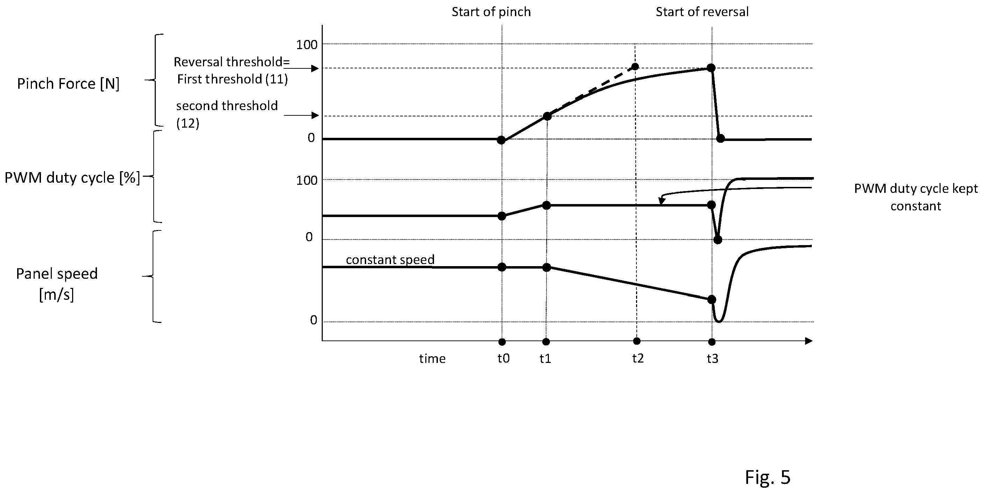

Fig. 5 shows a scheme in which the coherence between pinch force, pinch force thresholds 11, 12, PWM duty cycle 9 and closure member speed is explained for a first embodiment which is not part of the present invention.

In this embodiment a second threshold 12 is introduced and set at a lower pinch force level as the first threshold 11, the latter at which the closure member 2 will reverse. This second threshold 12 is set at a pinch force level 10, in the range of 15N - 40 N, preferably at 25 N. This second threshold 12 is be used in this example to modify the update of the duty cycle 9 of the PWM controller 8 to for instance keeping the duty cycle 9 constant at the level which it was when exceeding the second threshold 12, or to lower the update of the duty cycle 9 in a particular way, for instance such as described below.

As shown in Fig 5, at the start of the pinch event at t0, the PWM duty cycle 9 right away increases due to the requirement to keep the speed of the closure member 2 constant. At t1 the pinch force signal 10 exceeds the second threshold 12 and immediately the update of the duty cycle 9 is kept at the level of the duty cycle 9 which it was when exceeding the second threshold 12. Due to keeping the duty cycle 9 at the same level, the speed of the closure member 2 is reduced because of the increasing resistance caused by the pinched object and the mechanical resistance of the mechanical drive assembly 5. And thus the buildup of the pinch force is slowed down until the pinch force signal 10 exceeds the first threshold 11 and the pinch control module 7 incurs a reversal of the closure member 2. The slowdown of the buildup of the pinch force results in longer time till the pinch force signal 10 exceeds the first threshold 11. This is shown in the scheme in fig. 5, wherein the time of t2 from the "prior art" scheme is drawn in and whereby t3 is the time when the pinch force signal 10 exceeds the first threshold 11. It is clear that t3 > t2, and that thus there is more time to detect a pinch event. Introducing the second threshold 12, the overall pinch detection performance becomes less dependent of the PWM controller 8 and thus more stable.

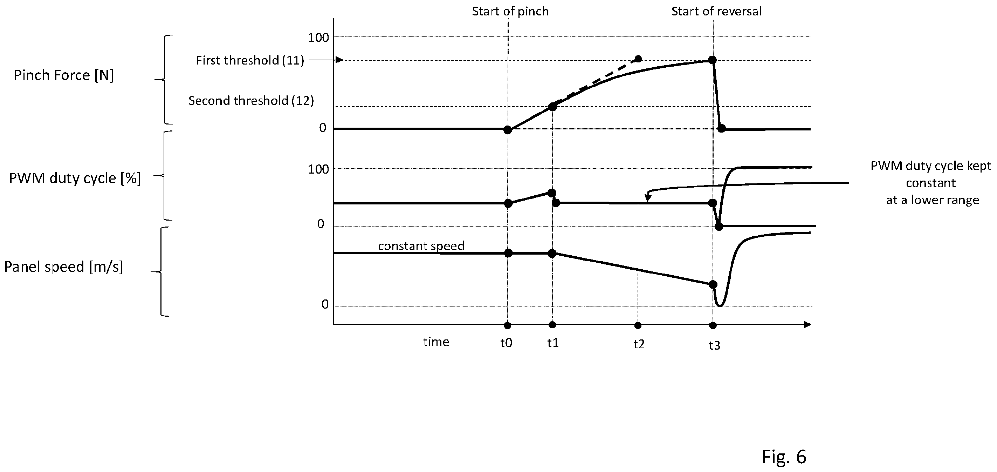

Figs. 6 to 8 show second, third and fourth embodiments, each showing another way to influence the PWM duty cycle 9 from the level that the duty cycle 9 is at t1, when the calculated pinch signal 10 exceeds the second threshold 12. For instance, in Fig.6 the PWM duty cycle 9 is lowered to a further constant level compared to the level of duty cycle 9 which was present at the moment that the calculated pinch force exceeds the second thresholds 12. The time of t2 is taken from the "prior art" scheme. It is clear that in each of the figures 6 to 8, t3 > t2 and that thus there is more time to detect a pinch event.

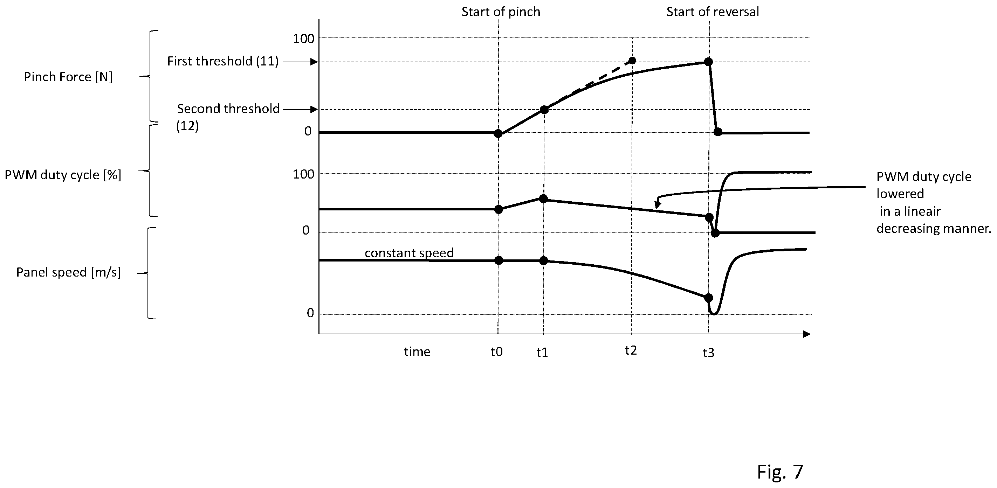

In Fig. 7 the PWM duty cycle 9 is lowered in a linear decreasing way compared to the level of duty cycle 9 which was present at the moment that the calculated pinch force signal 10 exceeds the second threshold 12. The time of t2 is taken from the "prior art" scheme. It is clear that t3 > t2, and that thus there is more time to detect a pinch event.

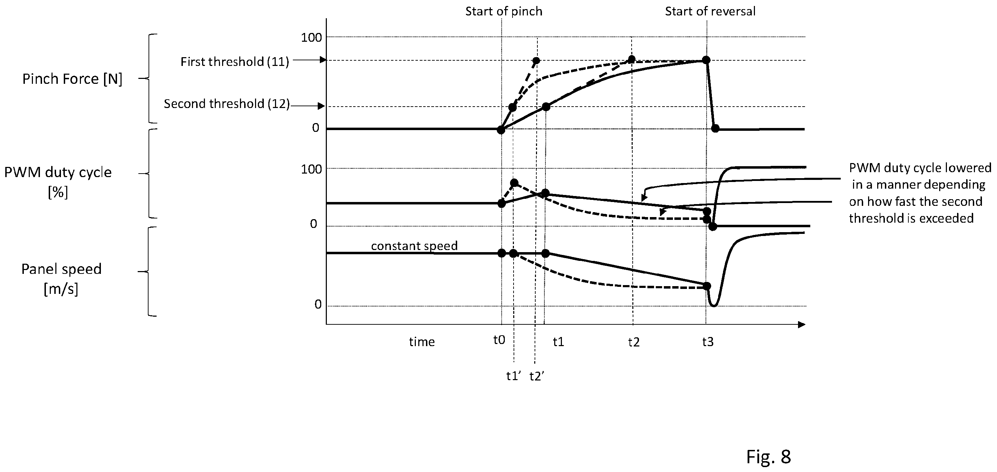

In Fig. 8 , according to the invention, the PWM duty cycle 9 is lowered in a manner depending on the steepness of the increase of the calculated pinch force signal 10 value before the pinch force signal 10 exceeds the second threshold 12. For instance, by the two examples in the scheme of fig. 8, wherein in the first example the calculated pinch force signal 10 exceeds the second threshold 12 in t1, and in a second example the calculated pinch force signal 10 exceeds the second threshold 12 much quicker in t1'. In the first example the calculated pinch force signal 10 increases in a longer period of time than in the second example. So in the first example the PWM duty cycle 9 is lowered in away such as described in fig. 7 and in the second example where the second threshold 12 is reached in a shorter period, the PWM duty cycle 9 is lowered in a non-linear decreasing manner. The time of t2 is taken from the "prior art" scheme. It is clear that t3 > t2 and t3 > t2', and that thus there is more time to detect a pinch event.

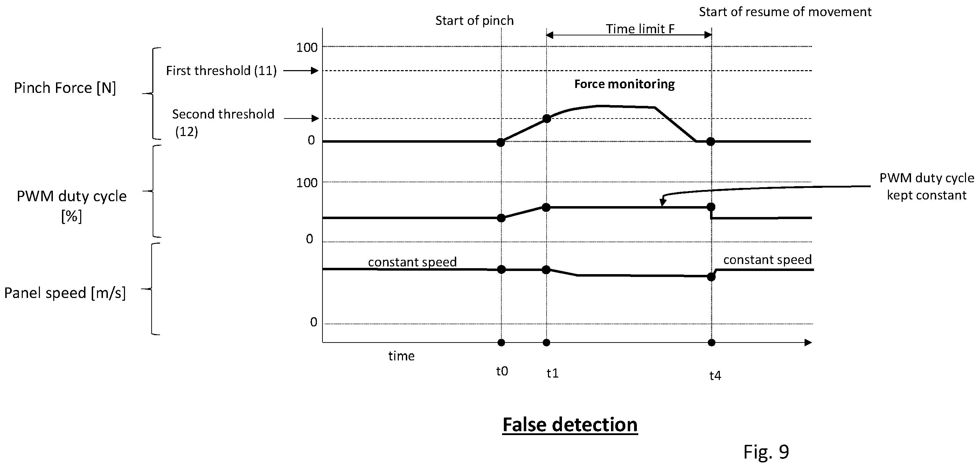

Fig. 9 shows: As the second threshold 12 for a likely pinch is much lower than the first reversal threshold 11, the chances for a false anti pinch detection increase.

Therefore, once the PWM update rate of the duty cycle 9 is lowered in ways described before, a monitoring of the pinch force takes place. If the calculated pinch force signal 10 does not increase above the first threshold 11 within a certain time limit F (at t4), the PWM controller 8 returns to normal operation to regulate that the closure member 2 moves with a constant speed and whereby the direction of movement of the closure member 2 continuous in the same direction as was before the start of the pinch.

The invention is not limited to the embodiments described before which may be varied widely within the scope of the invention as defined in the appended claims. For instance it is conceivable that the use of the second threshold 12 is not limited to the pinch detection for the closure member 2 in the situation of sliding the closure member 2 forward to its closed position, but also may be used for the pinch detection in case that the closure member 2 is in its tilted position, whereby the rear part of the closure member 2 is positioned above the roof surface and moves downwardly to the closed position.

## Claims

1. An open roof construction for use in a vehicle roof (1) of a vehicle, the open roof construction comprising:
a moveably arranged closure member (2) for selectively covering or at least partially exposing an opening (3) in the vehicle roof (1),
an electric motor (4) operatively coupled to the closure member (2) through a mechanical drive assembly (5) for moving the closure member (2),
an electric driving unit (6) for providing a supply signal to the electric motor (4) and
a pinch control module (7) operatively coupled to the electric driving unit (6) for controlling operation of the electric motor (4) in a pinch event, wherein the pinch control module (7) comprises at least:
a PWM controller (8) capable of supplying a duty-cycle (9),
wherein said pinch control module (7) is configured to:
- calculate a pinch force signal (10) based on an input of measured data,
- incur a safety stop of the closure member (2) in a pinch event during a closing operation of the closure member when the calculated pinch force signal (10) exceeds a first pinch threshold (11) and an immediate reversal of a polarity of the supply signal by the electric driving unit (6) to the electric motor (4), and
- have a second threshold (12) which is set to a lower level than the first threshold (11), which second threshold (12) marks the start of a suspected pinch event, upon exceeding of the pinch force signal (10) over the second threshold (12), and lower the duty cycle (9) of the PWM controller (8), depending on the steepness of the increase of the calculated pinch force signal (10) value before the pinch force signal (10) exceeds the second threshold (12).

2. The open roof construction according to claim 1, wherein the second threshold (12) is configured for a calculated pinch force signal 10 in the range of 15 N to 40N, more preferably of 25N.

3. The open roof construction according to any preceding claim, wherein the pinch control module (7) is configured to modify the update of the duty cycle (9) of the PWM controller (8) to a lower and constant value upon exceeding of the second threshold (12) the calculated pinch force signal (10), such that the speed of the moving closure member (2) is reduced.

4. The open roof construction according to any preceding claim, wherein the pinch control module (7) is configured to lower the duty cycle (9) of the PWM controller (8) in a linear decreasing manner when the calculated pinch force signal (10) exceeds the second threshold (12).

5. The open roof construction according to any preceding claim, wherein the pinch control module (7) is configured to vary the update of the duty cycle (9) of the PWM controller (8) such that the electric driving unit (6) supplies an adapted signal to the electric motor (4) which controls the closure member (2) moving with a constant speed, when the calculated pinch force signal (10) is below the second threshold (12).

6. The open roof construction according to any preceding claim, wherein the pinch control module (7) is configured to calculate a pinch force signal (10) from measured data from a group of data comprising measurement of the variation in speed of the closure member, battery voltage, vehicle speed, ambient temperature, motor speed, position of the closure member (2) in the roof opening (3), and motor current.

7. The open roof construction according to claim 6, wherein the pinch control module (7) is configured to calculate the pinch force signal (10) continuously from the continuously measured data and wherein the pinch control module (7) resumes to keep the closure member (2) at a constant speed when the calculated pinch force signal (10) returns from a value above the second threshold (12) to a value below the second threshold (12).

8. Method for detecting a pinch event of a moveably arranged closure member (2) of an open roof construction for use in a vehicle roof (1),
the method comprising the steps of:
a. providing measured data to the pinch control module (7);
b. calculating a pinch force signal (10) based on an input of measured data using a pinch control module (7),
e. comparing the calculated pinch force signal (10) with a first threshold (11), using the pinch control module (7),
f. upon exceeding of the pinch force signal (10) over the first threshold (11), incur a safety stop and a reversal of the closure member (2) using the pinch control unit (7), the electrical driving unit (6) and the electric motor (4), with additional steps defined between step b and e:
c. comparing the pinch force signal (10) with a second threshold (12), using the pinch control module (7), and
d. modifying the PWM duty cycle (9) upon exceeding of the pinch force signal (10) over the second threshold (12), using the PWM controller (8), by lowering the duty cycle (9) of the PWM controller (8) depending on the steepness of the increase of the calculated pinch force signal (10) value before the pinch force signal (10) exceeds the second threshold (12).

9. The method of claim 8, wherein step d. is: lowering the duty cycle (9) of the PWM controller (8) to a lower constant level when the calculated pinch force (10) exceeds the second threshold (12), using the PWM controller (8).

10. The method of claim 8, wherein step d. is:
lowering the duty cycle (9) of the PWM controller (8) in a linear decreasing manner when the calculated pinch force signal (10) exceeds the second threshold (12).

11. The method of any of claims 8-10, wherein in step a.:
the measured data is from a group of data comprising:
measurements of the variation in speed of the closure member (2), battery voltage, vehicle speed, ambient temperature, motor speed, position of the closure member (2) in the roof opening (3), motor current.

12. The method of any of claims 8-11, wherein in step f.:
an additional threshold of time limit F is used, wherein after expiry of the time limit F and the calculated pinch force signal (10) not exceeding the first threshold (11), a step of resuming of the PWM duty cycle (9) of before the pinch detection starts.

## Patentansprüche

1. Offendachkonstruktion zur Verwendung in einem Fahrzeugdach (1) eines Fahrzeugs, wobei die Offendachkonstruktion aufweist:
ein bewegbar angeordnetes Verschlusselement (2) zum selektiven Abdecken oder zumindest teilweisen Freigeben einer Öffnung (3) im Fahrzeugdach (1),
einen Elektromotor (4), der über eine mechanische Antriebsbaugruppe (5) mit dem Verschlusselement (2) gekoppelt ist zum Bewegen des Verschlusselements (2),
eine elektrische Antriebseinheit (6) zum Liefern eines Versorgungssignals an den Elektromotor (4) und
ein Verklemmungssteuermodul (7), das mit der elektrischen Antriebseinheit (6) betriebsgekoppelt ist zum Steuern des Betriebs des Elektromotors (4) in einem Verklemmungsfall,
wobei das Verklemmungssteuermodul (7) zumindest aufweist:
eine PWM-Steuervorrichtung (8), die imstande ist, ein Ansteuerzyklusverhältnis (9) zu liefern, wobei das Verklemmungssteuermodul (7) konfiguriert ist, um:
- ein Verklemmungskraftsignal (10) zu berechnen basierend auf einer Eingabe von gemessenen Daten,
- bei einem Verklemmungsereignis während eines Schließvorgangs des Verschlusselements einen Sicherheitsstopp des Verschlusselements (2) zu veranlassen, wenn das berechnete Verklemmungskraftsignal (10) einen ersten Verklemmungsschwellenwert (11) überschreitet, und eine sofortige Umkehrung einer Polarität des Versorgungssignals von der elektrischen Antriebseinheit (6) an den Elektromotor (4), und
- einen zweiten Schwellenwert (12) zu haben, der auf ein niedrigeres Level als der erste Schwellenwert (11) eingestellt ist, wobei der zweite Schwellenwert (12) den Beginn eines vermuteten Verklemmungsereignisses markiert, wenn das Verklemmungskraftsignal (10) den zweiten Schwellenwert (12) überschreitet, und das Ansteuerzyklusverhältnis (9) der PWM-Steuervorrichtung (8) zu verringern in Abhängigkeit von der Steilheit des Anstiegs des berechneten Verklemmungskraftsignal (10)-Werts, bevor das Verklemmungskraftsignal (10) den zweiten Schwellenwert (12) überschreitet.

2. Offendachkonstruktion gemäß Anspruch 1, wobei der zweite Schwellenwert (12) konfiguriert für ein berechnetes Verklemmungskraftsignal 10 im Bereich von 15 N bis 40N, vorzugsweise von

3. Offendachkonstruktion gemäß irgendeinem vorstehenden Anspruch, wobei das Verklemmungssteuermodul (7) konfiguriert ist, um die Aktualisierung des Ansteuerzyklusverhältnisses (9) der PWM-Steuervorrichtung (8) bei Überschreiten des zweiten Schwellenwerts (12) des berechneten Verklemmungskraftsignals (10) auf einen niedrigeren konstanten Wert zu ändern, so dass die Geschwindigkeit des bewegbaren Verschlusselements (2) verringert wird.

4. Offendachkonstruktion gemäß irgendeinem vorstehenden Anspruch, wobei das Verklemmungssteuermodul (7) konfiguriert ist, um das Ansteuerzyklusverhältnis (9) der PWM-Steuervorrichtung (8) in einer linear abnehmenden Weise zu verringern, wenn das berechnete Verklemmungskraftsignal (10) den zweiten Schwellenwert (12) überschreitet.

5. Offendachkonstruktion gemäß irgendeinem vorstehenden Anspruch, wobei das Verklemmungssteuermodul (7) konfiguriert ist, um die Aktualisierung des Ansteuerzyklusverhältnisses (9) der PWM-Steuervorrichtung (8) so zu variieren, dass die elektrische Antriebseinheit (6) ein angepasstes Signal an den Elektromotor (4) liefert, was das Verschlusselement (2) zum Bewegen mit konstanter Geschwindigkeit steuert, wenn das berechnete Verklemmungskraftsignal (10) unter dem zweiten Schwellenwert (12) liegt.

6. Offendachkonstruktion gemäß irgendeinem vorstehenden Anspruch, wobei das Verklemmungssteuermodul (7) konfiguriert ist, um ein Verklemmungskraftsignal (10) zu berechnen aus gemessenen Daten aus einer Gruppe von Daten, die aufweist Messung der Geschwindigkeitsänderung des Verschlusselements, Batteriespannung, Fahrzeuggeschwindigkeit, Umgebungstemperatur, Motordrehzahl, Position des Verschlusselements (2) in der Dachöffnung (3) und Motorstrom.

7. Offendachkonstruktion gemäß Anspruch 6, wobei das Verklemmungssteuermodul (7) konfiguriert ist, um das Verklemmungskraftsignal (10) kontinuierlich aus den kontinuierlich gemessenen Daten zu berechnen, und wobei das Verklemmungssteuermodul (7) fortsetzt, das Verschlusselement (2) auf einer konstanten Geschwindigkeit zu halten, wenn das berechnete Verklemmungskraftsignal (10) von einem Wert oberhalb des zweiten Schwellenwerts (12) auf einen Wert unterhalb des zweiten Schwellenwerts (12) zurückkehrt.

8. Verfahren zum Erfassen eines Verklemmungsereignisses eines bewegbar angeordneten Verschlusselements (2) einer Offendachkonstruktion zur Verwendung in einem Fahrzeugdach (1),
wobei das Verfahren aufweist die Schritte:
a. Bereitstellen von gemessenen Daten an das Verklemmungssteuermodul (7),
b. Berechnen eines Verklemmungskraftsignals (10) basierend auf einer Eingabe von gemessenen Daten unter Verwendung eines Verklemmungssteuermoduls (7),
e. Vergleichen des berechneten Verklemmungskraftsignals (10) mit einem ersten Schwellenwert (11) unter Verwendung des Verklemmungssteuermoduls (7),
f. bei Überschreiten des Verklemmungskraftsignals (10) über den ersten Schwellenwert (11) Veranlassen eines Sicherheitsstopps und einer Umkehrung des Verschlusselements (2) unter Verwendung des Verklemmungssteuermoduls (7), der elektrischen Antriebseinheit (6) und des Elektromotors (4), mit zusätzlichen Schritten, die zwischen Schritt b und e definiert sind:
c. Vergleichen des Klemmkraftsignals (10) mit einem zweiten Schwellenwert (12) unter Verwendung des Verklemmungssteuermoduls (7), und
d. bei Überschreiten des Verklemmungskraftsignals (10) über den zweiten Schwellenwert (12) Ändern, unter Verwendung der PWM-Steuervorrichtung (8), des Ansteuerzyklusverhältnisses (9) durch Verringern des Ansteuerzyklusverhältnisses (9) der PWM-Steuervorrichtung (8) in Abhängigkeit von der Steilheit des Anstiegs des berechneten Verklemmungskraftsignal (10)-Werts, bevor das Verklemmungskraftsignal (10) den zweiten Schwellenwert (12) überschreitet.

9. Verfahren gemäß Anspruch 8, wobei Schritt d. ist:
Verringern des Ansteuerzyklusverhältnisses (9) der PWM-Steuervorrichtung (8) auf ein niedrigeres konstantes Level, wenn das berechnete Klemmkraftsignal (10) den zweiten Schwellenwert (12) überschreitet, unter Verwendung der PWM-Steuervorrichtung (8).

10. Verfahren gemäß Anspruch 8, wobei Schritt d. ist:
Verringern des Ansteuerzyklusverhältnisses (9) der PWM-Steuervorrichtung (8) in einer linear abnehmenden Weise, wenn das berechnete Klemmkraftsignal (10) den zweiten Schwellenwert (12) überschreitet.

11. Verfahren gemäß irgendeinem der Ansprüche 8-10,
wobei in Schritt a.:
die gemessenen Daten aus einer Gruppe von Daten stammen, die aufweist: Messungen der Geschwindigkeitsänderung des Verschlusselements (2), Batteriespannung,
Fahrzeuggeschwindigkeit, Umgebungstemperatur, Motordrehzahl, Position des Verschlusselements (2) in der Dachöffnung (3) und Motorstrom.

12. Verfahren gemäß irgendeinem der Ansprüche 8-11, wobei in Schritt f.:
ein zusätzlicher Schwellenwert in Form eines Zeitgrenzwerts F verwendet wird, wobei, wenn nach Ablauf des Zeitgrenzwerts F das berechnete Klemmkraftsignal (10) den ersten Schwellenwert (11) nicht überschreitet, ein Schritt des Fortsetzens des PWM-Ansteuerzyklusverhältnisses (9) von vor der Verklemmungserfassung startet.

## Revendications

1. Structure de toit ouvrant destinée à être utilisée dans un toit de véhicule (1) d'un véhicule, la structure de toit ouvrant comprenant :
un organe de fermeture (2) agencé de manière mobile pour recouvrir sélectivement ou exposer au moins partiellement une ouverture (3) dans le toit de véhicule (1),
un moteur électrique (4) couplé de manière opérationnelle à l'organe de fermeture (2) par l'intermédiaire d'un ensemble d'entraînement mécanique (5) pour déplacer l'organe de fermeture (2),
une unité d'entraînement électrique (6) pour fournir un signal d'alimentation au moteur électrique (4) et
un module de commande de pincement (7) couplé de manière opérationnelle à l'unité d'entraînement électrique (6) pour commander le fonctionnement du moteur électrique (4) lors d'un événement de pincement, dans laquelle le module de commande de pincement (7) comprend au moins :
un dispositif de commande PWM (8) apte à fournir un rapport cyclique (9), dans laquelle ledit module de commande de pincement (7) est configuré pour :
- calculer un signal de force de pincement (10) sur la base d'une entrée de données mesurées,
- engendrer un arrêt de sécurité de l'organe de fermeture (2) lors d'un événement de pincement pendant une opération de fermeture de l'organe de fermeture lorsque le signal de force de pincement (10) calculé dépasse un premier seuil de pincement (11) et une inversion immédiate d'une polarité du signal d'alimentation par l'unité d'entraînement électrique (6) au moteur électrique (4), et
- avoir un second seuil (12) qui est réglé à un niveau inférieur au premier seuil (11), lequel second seuil (12) marque le début d'un événement de pincement suspecté, lorsque le signal de force de pincement (10) dépasse le second seuil (12), et abaisser le rapport cyclique (9) du dispositif de commande PWM (8), en fonction de la pente de l'augmentation de la valeur du signal de force de pincement (10) calculé avant que le signal de force de pincement (10) ne dépasse le second seuil (12).

2. Structure de toit ouvrant selon la revendication 1, dans laquelle le second seuil (12) est configuré pour un signal de force de pincement 10 calculé dans la plage de 15 N à 40 N, plus préférablement de 25 N.

3. Structure de toit ouvrant selon l'une quelconque des revendications précédentes, dans laquelle le module de commande de pincement (7) est configuré pour modifier la mise à jour du rapport cyclique (9) du dispositif de commande PWM (8) jusqu'à une valeur inférieure et constante lorsque le signal de force de pincement (10) calculé dépasse le second seuil (12), de sorte que la vitesse de l'organe de fermeture mobile (2) est réduite.

4. Structure de toit ouvrant selon l'une quelconque des revendications précédentes, dans laquelle le module de commande de pincement (7) est configuré pour abaisser le rapport cyclique (9) du dispositif de commande PWM (8) d'une manière linéaire décroissante lorsque le signal de force de pincement (10) calculé dépasse le second seuil (12).

5. Structure de toit ouvrant selon l'une quelconque des revendications précédentes, dans laquelle le module de commande de pincement (7) est configuré pour faire varier la mise à jour du rapport cyclique (9) du dispositif de commande PWM (8) de sorte que l'unité d'entraînement électrique (6) fournit un signal adapté au moteur électrique (4) qui commande l'organe de fermeture (2) en mouvement à une vitesse constante, lorsque le signal de force de pincement (10) calculé est inférieur au second seuil (12).

6. Structure de toit ouvrant selon l'une quelconque des revendications précédentes, dans laquelle le module de commande de pincement (7) est configuré pour calculer un signal de force de pincement (10) à partir de données mesurées d'un groupe de données comprenant la mesure de la variation de vitesse de l'organe de fermeture, de tension de batterie, de vitesse de véhicule, de température ambiante, de vitesse de moteur, de position de l'organe de fermeture (2) dans l'ouverture de toit (3), et de courant de moteur.

7. Structure de toit ouvrant selon la revendication 6, dans laquelle le module de commande de pincement (7) est configuré pour calculer le signal de force de pincement (10) en continu à partir des données mesurées en continu et dans laquelle le module de commande de pincement (7) recommence à maintenir l'organe de fermeture (2) à une vitesse constante lorsque le signal de force de pincement (10) calculé repasse d'une valeur supérieure au second seuil (12) à une valeur inférieure au second seuil (12).

8. Procédé de détection d'un événement de pincement d'un organe de fermeture (2) agencé de manière mobile d'une structure de toit ouvrant pour une utilisation dans un toit de véhicule (1),
le procédé comprenant les étapes consistant à :
a. fournir des données mesurées au module de commande de pincement (7) ;
b. calculer un signal de force de pincement (10) sur la base d'une entrée de données mesurées à l'aide d'un module de commande de pincement (7),
e. comparer le signal de force de pincement (10) calculé avec un premier seuil (11), à l'aide du module de commande de pincement (7),
f. lorsque le signal de force de pincement (10) dépasse le premier seuil (11), engendrer un arrêt de sécurité et une inversion de l'organe de fermeture (2) à l'aide de l'unité de commande de pincement (7), de l'unité d'entraînement électrique (6) et du moteur électrique (4), avec des étapes supplémentaires définies entre les étapes b et e :
c. comparer le signal de force de pincement (10) avec un second seuil (12), à l'aide du module de commande de pincement (7), et
d. modifier le rapport cyclique PWM (9) lorsque le signal de force de pincement (10) dépasse le second seuil (12), à l'aide du dispositif de commande PWM (8), en abaissant le rapport cyclique (9) du dispositif de commande PWM (8) en fonction de la pente de l'augmentation de la valeur du signal de force de pincement (10) calculé avant que le signal de force de pincement (10) ne dépasse le second seuil (12).

9. Procédé selon la revendication 8, dans lequel l'étape d. comprend : l'abaissement du rapport cyclique (9) du dispositif de commande PWM (8) à un niveau constant inférieur lorsque le signal de force de pincement (10) calculé dépasse le second seuil (12), à l'aide du dispositif de commande PWM (8).

10. Procédé selon la revendication 8, dans lequel l'étape d. comprend : l'abaissement du rapport cyclique (9) du dispositif de commande PWM (8) d'une manière linéaire décroissante lorsque le signal de force de pincement (10) calculé dépasse le second seuil (12).

11. Procédé selon l'une quelconque des revendications 8 à 10, dans lequel à l'étape a. : les données mesurées proviennent d'un groupe de données comprenant :
des mesures de la variation de vitesse de l'organe de fermeture (2), de tension de batterie, de vitesse de véhicule, de température ambiante, de vitesse de moteur, de position de l'organe de fermeture (2) dans l'ouverture de toit (3), et de courant de moteur.

12. Procédé selon l'une quelconque des revendications 8 à 11, dans lequel à l'étape f. : un seuil supplémentaire de limite de temps F est utilisé, dans lequel après l'expiration de la limite de temps F et lorsque le signal de force de pincement (10) calculé ne dépasse pas le premier seuil (11), une étape débute consistant à rétablir le rapport cyclique PWM (9) à une valeur affichée avant la détection de pincement.
